# EUROPEAN PATENT APPLICATION

(11) **EP 4 837 688 A1**
(43) Date of publication of application: **11.11.2026**
(21) Application number: 26173790.2
(22) Date of filing: 21.04.2026
(51) Int. Cl.: B23K 20/12, B33Y 50/02, B23K 103/14, B33Y 10/00, B33Y 30/00

(54) **AIRCRAFT COMPONENT OVERHAUL USING SOLID STATE ADDITIVE MANUFACTURING**

(30) Priority: 21.04.2025 US 202519184686
(71) Applicant: RTX Corporation, Farmington, CT 06032 (US)
(72) Inventor: EL-WARDANY, Tahany, Vernon, 06066 (US); CHONG, Joseph, Springfield, 65087 (US); BEDARD, Benjamin, Manchester, 06042 (US)
(74) Representative: Dehns

(57) **Abstract**

A method for overhauling a component (22) includes providing a robotic unit (24), a solid state additive manufacturing device (26), a machining device (28) and a light scanning device (32); scanning a substrate (60) using the light scanning device (32) to provide substrate scan data; comparing the substrate scan data to substrate reference data; depositing, using the solid state additive manufacturing device (26), a deposition material (58) with the substrate (60); and machining, using the machining device (28), a first object (82) to provide a second object (84). The robotic unit (24) is configured to move one or more of the solid state additive manufacturing device (26), the machining device (28), and the light scanning device (32) along a plurality of axes. The deposition material (58) is plasticized and bonded to the substrate (60) during deposition. The first object (82) includes the substrate (60) and the deposition material (58) bonded to the substrate (60).

## Description

### BACKGROUND OF THE INVENTION

### 1. Technical Field

The present disclosure relates to overhauling a component using additive manufacturing, in general, and to overhauling a component using robotic friction stir additive manufacturing, in particular.

### 2. Background Information

Defects in a component may be overhauled using deposition (e.g., filler) materials. Various processes are known in the art for applying deposition materials to a component. While these known processes have various advantages, there is still room in the art for improvement. In particular, there is a need in the art for overhaul processes which can reduce material waste and/or manufacturing costs.

### SUMMARY

According to an aspect of the present disclosure, a method for overhauling a component is provided. The method includes providing a robotic unit, a solid state additive manufacturing device, a machining device and a light scanning device; scanning a substrate using the light scanning device to provide substrate scan data; comparing the substrate scan data to substrate reference data; depositing, using the solid state additive manufacturing device, a deposition material with the substrate; and machining, using the machining device, a first object to provide a second object. The robotic unit is configured to move one or more of the solid state additive manufacturing device, the machining device, and the light scanning device along a plurality of axes. The deposition material is plasticized and bonded to the substrate during depositing. The first object comprises the substrate and the deposition material bonded to the substrate.

In any of the aspects or embodiments described above and herein, the method includes providing a component table configured to retain the substrate and position the substrate relative to the robotic unit. The component table may be movable along a first axis and a second axis.

In any of the aspects or embodiments described above and herein, the deposition material comprises a sacrificial wire.

In any of the aspects or embodiments described above and herein, the solid state additive manufacturing device is configured as a friction stir additive manufacturing (FSAM) device. The FSAM device may include a sensor configured to detect a temperature or a pressure of the deposition material during the depositing.

In any of the aspects or embodiments described above and herein, the substrate reference data comprises data from a design specification for the component.

In any of the aspects or embodiments described above and herein, comparing the substrate scan data to substrate reference data includes generating robotic unit toolpath data. The robotic unit toolpath data provides a plurality of toolpaths to the robotic unit which can move the robotic unit along the plurality of axes during the depositing and the machining. The plurality of toolpaths comprise a first toolpath and a second toolpath. The first toolpath can move the robotic unit during the depositing. The second toolpath can move the robotic unit during the machining. The second toolpath is different than the first toolpath.

In any of the aspects or embodiments described above and herein, depositing the deposition material includes rotating the deposition material along a central axis and applying the deposition material against the substrate using a predetermined pressure. A spindle may be configured to deliver the deposition material towards the substrate in a continuous feed. The spindle can include a sensor configured to sense a FSAM setpoint of the deposition material as the deposition material is applied to the substrate.

In any of the aspects or embodiments described above and herein, the machining removes some of the deposition material bonded to the substrate. The plurality of axes may include six to eight axes

In any of the aspects or embodiments described above and herein, deposition material comprises a titanium metal alloy. The titanium metal alloy and the substrate may comprise a common metal alloy.

In any of the aspects or embodiments described above and herein, the light scanning device is configured as a laser light or a blue light.

In any of the aspects or embodiments described above and herein, the method further includes receiving a damaged component previously installed within an engine. The scanning, the depositing and the machining may be performed to repair the damaged component to provide the component.

According to an aspect of the present disclosure, a method for providing a component is provided. The method includes scanning a substrate using a light scanning device to provide substrate scan data, comparing the substrate scan data to substrate reference data to provide additive manufacturing data and machining data, rotating a deposition material along a central axis using a solid state additive manufacturing device, applying, using the solid state additive manufacturing device, the deposition material against the substrate based on the additive manufacturing data, and machining, using a machining device, a first object to provide a second object based on the machining data. The deposition material is applied against the substrate at a predetermined pressure. The deposition material plasticizes and bonds to the substrate during application. The first object comprises the substrate and the deposition material bonded to the substrate. The light scanning device, the solid state additive manufacturing device, and the machining device are operatively coupled to a robotic unit. The robotic unit is configured to move along a plurality of axes.

In any of the aspects or embodiments described above and herein, the solid state additive manufacturing device is a friction stir additive manufacturing device.

In any of the aspects or embodiments described above and herein, a component table is configured to retain the substrate and position the substrate relative to the robotic unit. The component table is movable along a first axis and a second axis.

According to an aspect of the present disclosure, a system for providing a component comprising a substrate is provided. The system includes a robotic unit, a component table, a scanning device, a controller, a solid state additive manufacturing device, and a machining device. The robotic unit is configured to translate along a plurality of axes. The component table is configured to retain the substrate and position the substrate relative to the robotic unit. The component table is translatable with respect to the robotic unit. The scanning device is configured to scan the substrate using light to provide substrate scan data indicative of one or more characteristics of the substrate. The scanning device is operatively coupled to the robotic unit. The controller is configured to compare the substrate scan data to substrate reference data to provide robotic unit toolpath data, additive manufacturing data and machining data. The solid state additive manufacturing device is configured to deposit deposition material with the substrate based on the additive manufacturing data and the robotic unit toolpath data. The deposition material is plasticized and bonded to the substrate during the depositing of the deposition material. The solid state additive manufacturing device is operatively coupled with the robotic unit. The machining device is configured to machine a first object based on the machining data and the robotic unit toolpath data. The first object comprises the substrate and the deposition material bonded to the substrate. The machining device is operatively coupled to the robotic unit.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a schematic illustration of a system for overhauling a component according to an embodiment of the present disclosure.
FIG. 2 is a schematic illustration of a robotic unit and component table for the overhaul system of FIG. 1.
FIG. 3 is a schematic illustration of a solid state additive manufacturing device according to an embodiment of the present disclosure.
FIG. 4 is a schematic illustration of a machining device according to an embodiment of the present disclosure.
FIG. 5 is a flow diagram of a method for overhauling the component according to an embodiment of the present disclosure.
FIGS. 6-9 are partial sectional illustrations of the component during various steps of the overhauling method according to an embodiment of the present disclosure.

### DETAILED DESCRIPTION

The present disclosure includes systems and methods for overhauling (e.g., repairing) a component 22. This overhauling may restore one or more features of a previously formed component to new, like new or better than new condition. The component, for example, may be overhauled to fix one or more defects (e.g., cracks, wear and/or other damage) imparted during previous use of the component; e.g., when installed within an engine. The component may also, or alternatively, be overhauled to fix one or more defects imparted during an initial formation of the component.

The component may be any stationary component within a hot section of the gas turbine engine; e.g., a combustor section, a turbine section or an exhaust section. Examples of the stationary component include, but are not limited to, a vane, a platform, a gas path wall, a liner and a shroud. The present disclosure, however, is not limited to stationary component applications. The engine component, for example, may alternatively be a rotor blade; e.g., fan blade stages, compressor blade stages, low-pressure turbine blades, or high pressure turbine blades (hot section engine components, where both light weight and high performance are critical). The present disclosure is also not limited to hot section engine components. For ease of description, however, the overhaul systems and methods may be described below with respect to overhauling a gas turbine engine component such as a turbine blade, a turbine vane or other fan and/or compressor rotors/stators within the gas turbine engine.

The component may be included in various gas turbine engines. The component, for example, may be included in a geared gas turbine engine where a gear train connects one or more shafts to one or more rotors in a fan section, a compressor section and/or any other engine section. Alternatively, the component may be included in a direct-drive gas turbine engine configured without a gear train. The component may be included in a gas turbine engine configured with a single spool, with two spools, or with more than two spools. The gas turbine engine may be configured as a turbofan engine, a turbojet engine, a turboprop engine, a turboshaft engine, a propfan engine, a pusher fan engine or any other type of gas turbine engine. The gas turbine engine may alternatively be configured as an auxiliary power unit (APU) or an industrial gas turbine engine. The present disclosure therefore is not limited to any particular types or configurations of gas turbine engines. In some embodiments, the overhaul systems and methods of the present disclosure may be used to overhaul component(s) for non-gas turbine engine applications; e.g., for reciprocating piston internal combustion engine applications, for rotary internal combustion engine applications, etc.

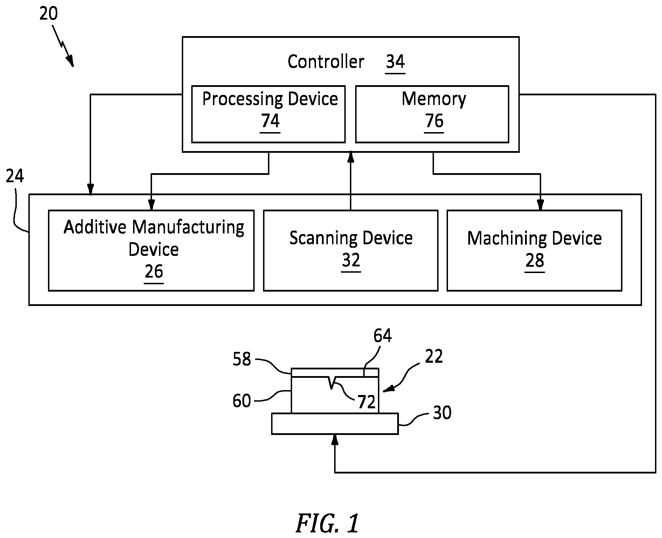

FIG. 1 schematically illustrates an exemplary overhaul system 20 for overhauling a component 22 using an automated robotic unit 24. The automated robotic unit 24 includes solid state additive manufacturing (AM) device 26 (e.g., a three-dimensional (3D) printer), a machining device 28 (e.g., a computer numerical control (CNC) machining device), a component table 30 and a scanning device 32. The overhaul system 20 of FIG. 1 also includes a controller 34 in signal communication (e.g., hardwired and/or wirelessly coupled) with the other overhaul system components 24, 26, 28, 30 and 32.

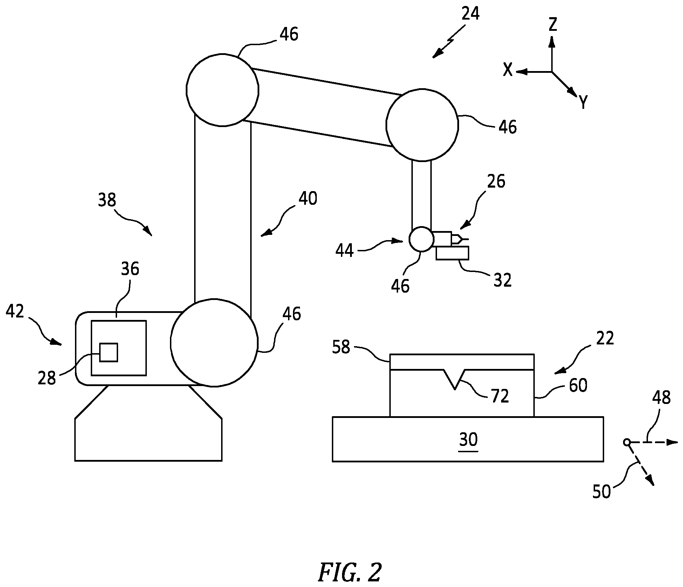

FIG. 2 schematically illustrates the automated robotic unit 24 and the component table 30 relative to the component 22. The robotic unit 24 is operatively coupled to the scanning device 32, the solid state additive manufacturing device 26 and the machining device 28. A tool bank 36 stores the machining device 28 when not in use (e.g., during additive operations discussed below) and can store the solid state additive manufacturing device 26 when not in use (e.g., during subtractive operations discussed below). The scanning device 32 of FIG. 2 is configured to identify positions of the component 22 relative to a three-dimensional coordinate space (discussed in further detail below).

The robotic unit 24 may include a positioning system 38 configured to position any of the scanning device 32, solid state additive manufacturing device 26, and machining device 28 relative to component 22. For example, the positioning system 38 of FIG. 2 includes a robotic arm 40 configured to position the solid state additive manufacturing device 26. The robotic arm 40 includes a base end 42, a distal end 44, and one or more movable joints 46 between the base end 42 and the distal end 44. Each movable joint 46 may be moved or otherwise controlled, for example, by an independent servo motor or other actuator. The distal end 44 may be connected to one or more of the scanning device 32, solid state additive manufacturing device 26 or machining device 28. The robotic arm 40 is configured to move one or more of the scanning device 32, the solid state additive manufacturing device 26 and the machining device 28 relative to the component 22. For example, the robotic arm 40 may be configured to move the scanning device 32, the solid state additive manufacturing device 26 and/or the machining device 28 along an x-axis, a y-axis, and a z-axis, and rotate the scanning device 32, the solid state additive manufacturing device 26 and/or the machining device 28 relative to the x-axis, the y-axis, and the z-axis (e.g., pitch, yaw, and roll) in 6-axis motion.

The component table 30 is configured to move (e.g., shift, translate) along a first axis 48 and a second axis 50 of the component table 30. For ease of description, the first axis of FIG. 2 may be understood to be oriented along the x-axis and the second axis may be understood to be oriented along the y-axis, though the present disclosure is not limited to any orientation of the first axis and the second axis in a three-dimensional coordinate space. The component table 30 is configured to securely retain the component 22 and to move the component 22 along the first and/or second axis to position the component 22 relative to the robotic unit 24. The component table 30 may include fasteners (e.g., mechanical fasteners) and/or other mounting hardware for securely mounting or otherwise retaining the component 22 on the component table 30.

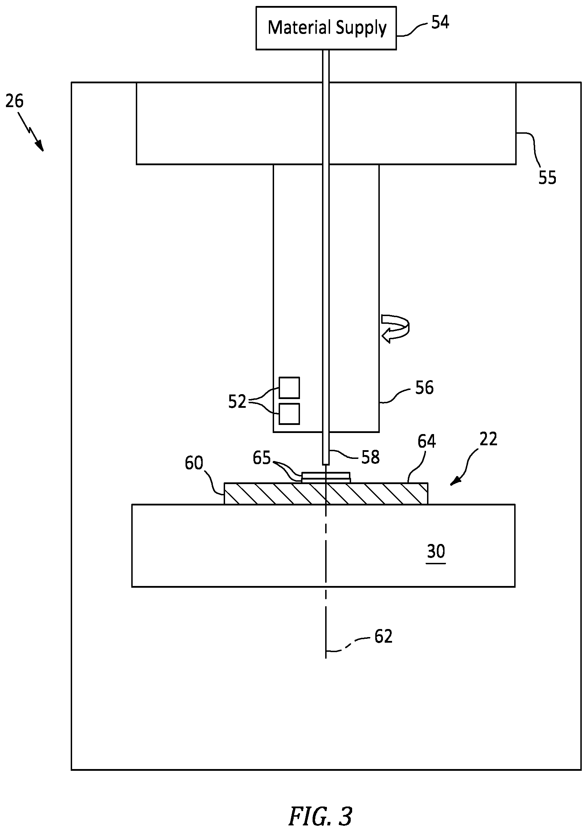

Referring to FIG. 3, the solid state additive manufacturing device 26 is configured as a friction stir additive manufacturing device (FSAM). The solid state additive manufacturing device 26 of FIG. 3, for example, includes sensors 52, a material supply 54, a manipulator 55 and a spindle 56. The manipulator 55 is configured to move the spindle 56 relative to the component 22. The manipulator 55, for example, may be the same or similar to the robotic arm 40. The solid state additive manufacturing device 26 of FIG. 3 also includes the component table 30.

The material supply 54 is configured to store a quantity of a deposition material 58. The deposition material 58 may comprise a sacrificial wire or rod of deposition material formed from titanium alloy material. This material supply 54 is also configured to supply the wire or rod to the spindle 56 during operation of the solid state additive manufacturing device 26. Examples of the material supply 54 include, but are not limited to, a spool or reel to provide a continuous feed of the deposition material 58 to the spindle 56.

The spindle 56 is configured to deliver (e.g., feed) the deposition material 58 received from the material supply 54 to a substrate 60 of the component 22 during operation of the solid state additive manufacturing device 26. During operation, the spindle 56 is configured to rotate the deposition material 58 relative to a central axis 62 and apply (e.g., urge, press) the deposition material 58 against a surface 64 of the substrate 60 with a desired pressure. Friction between the deposition material 58 and the substrate 60 generates heat. When the temperature and pressure of the deposition material 58 are at a FSAM setpoint, which can be sensed by sensors 52, the spindle 56 is moved relative to the component 22 to deposit layers 65 of deposition material 58 on the substrate 60. Herein, the term "FSAM setpoint" may describe a temperature or pressures at which the deposition material 58 is plasticized without (e.g., partial or complete) liquification of the deposition material 58. This is in contrast to, for example, a powder laser welding process where a deposition material is melted to a liquid state (e.g., in a melt pool) by a laser beam and then solidified as a solid mass. The FSAM setpoint may be, for example, about fifty percent to about seventy percent (50-70%) of the melting point of the deposition material.

The sensors 52 can be disposed in or relative to the solid state additive manufacturing (AM) device 26 and can be configured to sense various operating parameters of the solid state additive manufacturing device 26, such as an applied load, a temperature of the deposition material 58, or any other desired parameter.

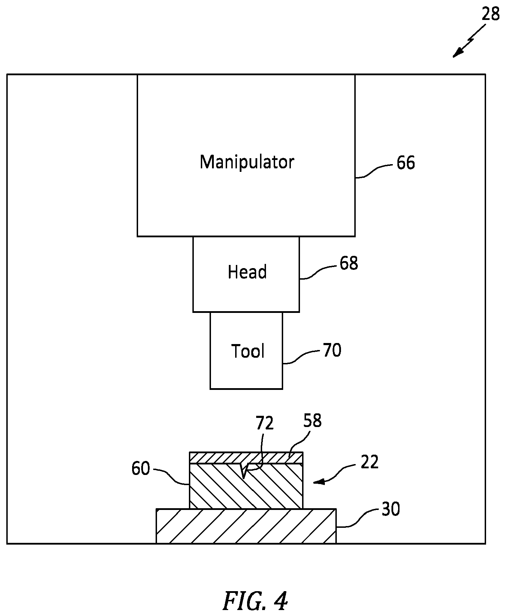

Referring to FIG. 4, the machining device 28 includes a manipulator 66, a head 68 and at least one machining tool 70 mated with the head 68. The machining device 28 of FIG. 4 also includes the component table 30. The manipulator 66 is configured to move the head 68 and the machining tool 70 relative to the component 22. The manipulator 66, for example, may be the same or similar to the robotic arm 40. The head 68 is configured to hold the machining tool 70. The head 68 is also configured to facilitate the actuation of the machining tool 70; e.g., rotate the machining tool 70 about an axis. The machining tool 70 is configured to machine the component 22; e.g., remove material from the component 22. Examples of the machining tool 70 include, but are not limited to, a drill bit, a milling bit, a milling cutter, a grinding bit, a sanding bit and a polishing bit. In another example, the machining tool 70 may comprise a milling spindle including an end mill tool which is particularly effective in milling titanium-based materials. Still, in other examples, the machining tool 70 may be a lathe bit where, for example, the component 22 is moved (e.g., rotated) relative to the machining tool 70. The present disclosure, however, is not limited to such an exemplary machining device with one or more machining tools 70; e.g., rotatable bits. For example, in other embodiments, the machining device 28 may also or alternatively include a laser to laser machine the component 22 and/or an electrical discharge machining (EDM) device to machine the component 22.

The scanning device 32 of FIGS. 1 and 2 is configured to map a surface geometry of an exterior of the component 22. The scanning device 32, for example, may be configured to map one or more dimensions of (and/or one or more spatial coordinates for) at least one portion or an entirety of the exterior of the component 22. Briefly, the term "map" may describe a process of determining (e.g., measuring) and collecting certain information. The scanning device 32 may also be configured to map a feature (or multiple features) projecting into the component 22; e.g., an opening to a void 72 such as, but not limited to, a crack, a fracture, a slice, a gouge, a dimple, etc. The scanning device 32, for example, may be configured to map a geometry, one or more dimensions, and/or one or more spatial coordinates for feature(s) projecting into the component 22. The scanning device 32 of FIG. 1 is configured as a light scanning device; e.g., a laser light scanning device or a blue light scanning device. This scanning device 32 is configured to project a laser light or a pattern of light (e.g., structured blue light) onto the component 22 using one or more light projectors. The laser light may be formed by light having a wavelength between 500-1,070nm. In some embodiments, the laser light may be formed by green light having a wavelength between 500-600nm. In other embodiments, the laser light may be formed by infrared and near-infrared light having a wavelength between 1,030-1,070nm. For example, light having wavelengths between 500-550nm and 1,000-1,100nm are particularly well-suited for scanning titanium-based surfaces due to surface absorption rates. The pattern of light may be formed by blue light having a wavelength between 450-495nm. The scanning device 32 is configured to pick up (e.g., image, capture, detect, etc.) distortions in the laser light and/or pattern of light against the exterior of the component 22 using one or more imaging devices; e.g., cameras. The scanning device 32 is further configured to map the component 22 based on the distortions in the laser light and/or pattern of light. The scanning device 32 may also or alternatively be configured to machine (e.g., precision micro-machine), mark, texture, alloy, polish, laser shock peen and/or clean the exterior of the component 22 with minimal thermal damage thereto.

The controller 34 may be implemented with a combination of hardware and software. The hardware may include at least one processing device 74 and a memory 76, which processing device 74 may include one or more single-core and/or multi-core processors. The hardware may also or alternatively include analog and/or digital circuitry other than that described above.

The memory 76 is configured to store software (e.g., program instructions) for execution by the processing device 74, which software execution may control and/or facilitate performance of one or more operations such as those described below. The memory 76 may be a non-transitory computer readable medium. For example, the memory 76 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

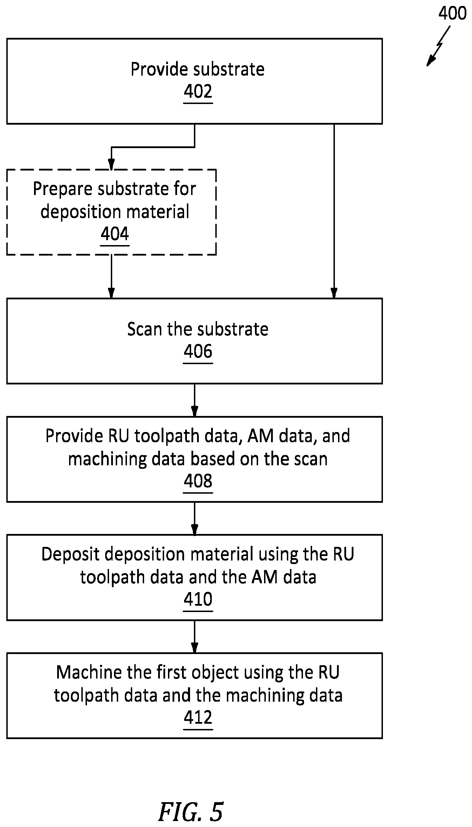

FIG. 5 is a flow diagram of an exemplary method 400 for overhauling a component 22; e.g., a previously installed / used engine component. For ease of description, the overhaul method 400 is described with respect to the overhaul system 20 overhauling the component 22. The overhaul method 400, however, is not limited to any particular overhaul system types or configurations. Furthermore, some or all of the method steps may alternatively be performed to form a new component.

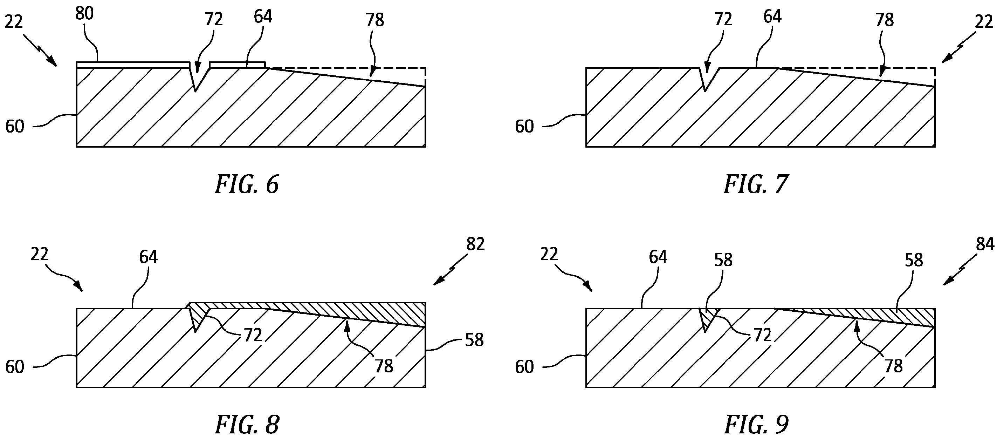

In step 402, referring to FIGS. 6 and 7, the substrate 60 is provided. For ease of description, this substrate 60 is described as part of a damaged component 22. For example, the component 22 of FIG. 6 includes at least one void 72 such as, but not limited to, a crack, a fracture, a slice, a gouge, a dimple, etc. This void 72 projects partially into the component 22 and the substrate 60 from the exterior of the component 22. The component 22 of FIGS. 6 and 7 also includes a wear region 78 where a portion of the component 22 and the substrate 60 has been worn away due to, for example, erosion, rubbing and/or otherwise. Of course, in other embodiments, the component 22 may include multiple voids, multiple wear regions, the void(s) without any wear region, the wear region(s) without any void, and/or one or more other substrate defects.

Optionally in step 404, the component 22 may be prepared for the deposition material 58. A coating 80 (see FIG. 6) over at least a portion or an entirety of the substrate 60, for example, may be removed to expose the underlying substrate 60 and the surface 64 of the substrate 60 (see e.g., FIG. 7). The coating 80 may be removed using various techniques such as, but not limited to, chemical stripping, blasting and/or machining. In addition, or alternatively, the void 72 may be machined (e.g., enlarged, smoothed, etc.), cleaned out and/or otherwise processed. This preparation step 404 may be performed by the machining device 28 and/or other devices part of or discrete from the overhaul system 20.

In step 406, the substrate 60 is scanned using the scanning device 32. The robotic unit (RU) of FIG. 2, for example, scans the substrate 60 of FIG. 7 using the scanning device 32 in 6-axis of movement to map one or more exterior characteristics of the substrate 60 and/or one or more interior characteristics of the substrate 60. Similarly, the component table 30 may be translated along the first axis and the second axis during the scanning processes to map the interior and/or exterior characteristics of the substrate 60. Examples of the exterior substrate characteristics include, but are not limited to, a surface geometry, one or more dimensions, and/or one or more spatial coordinates of an exterior of the substrate 60. Examples of the interior substrate characteristics include, but are not limited to, a geometry, one or more dimensions, and/or one or more spatial coordinates of feature(s) projecting into the substrate 60; e.g., the opening to the void 72. The scanning device 32 then provides substrate scan data to the controller 34 indicative of the one or more mapped substrate characteristics. The scan data may be in the form of a computer aided design (CAD) model file.

In step 408, the substrate scan data is processed to provide robotic unit toolpath data, additive manufacturing data, and/or machining data. The controller 34 of FIG. 1, for example, may compare the one or more mapped substrate characteristics from the substrate scan data with respective characteristics from substrate reference data. For example, the one or more mapped substrate characteristics from the substrate scan data may be aligned with respective characteristics from substrate reference data. This substrate reference data may be data input from (or derived from) a design specification for the component 22. The substrate reference data may be, for example, a design specification of an original equipment manufacturer (OEM). In other words, the controller 34 may compare the one or more mapped characteristics for the substrate 60 being worked on (e.g., overhauled) to one or more corresponding characteristics of a (e.g., theoretical) design space component; e.g., a component formed according to the design specification. The controller 34, for example, may generate a solid model of the scanned substrate 60 to compare to a solid model of the design space component.

The controller 34 may thereby evaluate the current state/condition of the substrate 60, and generate the robotic unit toolpath data for use with the solid state additive manufacturing device 26 and/or the machining device 28 to place the substrate 60 of FIG. 7 into like new (or new) condition; e.g., to have the same (or similar) characteristics as the design space component. For example, the robotic unit toolpath data may provide a plurality of directional inputs to manipulate (e.g., translate, move, rotate, etc.) the robotic arm 40 along a plurality of axes (e.g., 6-axis motion) to perform additive operations using the solid state additive manufacturing device 26 and/or subtractive operations using the machining device 28. The robotic unit toolpath data may include a first toolpath for use with the solid state additive manufacturing device 26 and a second toolpath for use with the machining device 28. The first toolpath may be different than the second toolpath. The robotic unit toolpath data may utilize the 6-axis motion of the robotic arm 40 and/or the 2-axis motion of the component table 30 (e.g., 2-axis, 6-axis, and/or 8-axis motion) to manipulate, translate, or otherwise move the robotic arm 40 during additive and subtractive operations place the component 22 and the substrate 60 into like new (or new) condition.

The controller 34 may determine, using the additive manufacturing data, what additive operations may be performed (e.g., composition of the deposition material 58 to be deposited, amounts (e.g., number of layers, volume) of deposition material 58 to be deposited, where to deposit the deposition material 58, path(s) to follow for the depositing of the deposition material 58, etc.) For example, the controller 34 may identify material deficits between the solid model of the scanned substrate 60 and the solid model of the design space component, and determine how to fill those material deficits with the deposition material 58. The additive manufacturing data may include one or more commands for the solid state additive manufacturing device 26 to place the substrate 60 of FIG. 7 into the like new (or new) condition. The additive manufacturing data may further include operating parameters of the solid state additive manufacturing device 26 of FIG. 3, such as a rotational speed of the spindle 56, a vertical in-feed rate of the deposition material 58, a maximum pressure applied to the substrate using the spindle 56, a longitudinal feed rate of deposition material 58, etc.

Similarly, the controller 34 may determine, using the machining data, what subtractive operations may be performed (e.g., amounts of material to be removed, where to remove the material, path(s) for the machining device 28 to follow, etc.) to place a first object 82 of FIG. 8 into like new (or new) condition. For ease of description, the first object 82 refers to the component 22 after additive operations are performed and includes the substrate 60 and the deposition material 58 plasticized and bonded (e.g., metallurgically bonded) to the substrate 60. Once fully bonded, the first object 82 has a refined microstructure and good mechanical properties. The machining data may include one or more commands for the machining device 28 to place the first object 82 of FIG. 8 into the like new (or new) condition.

In step 410, referring to FIG. 8, a first object 82 is additive manufactured. The robotic unit 24 of FIG. 2, for example, utilizes the solid state additive manufacturing device 26 to deposit the deposition material 58 with (e.g., onto) the substrate 60 to form the first object 82. This deposition material 58 is deposited based on / according to the robotic unit toolpath data and the additive manufacturing data; e.g., command(s) provided by the controller 34. The deposition material 58 may thereby be selectively deposited using the first toolpath of the robotic arm 40 and/or component table 30 to at least partially restore or otherwise place the component 22 and the substrate 60 close to the like new (or new) condition.

The deposition material 58 may be or otherwise include metal such as, but not limited to, titanium (Ti) alloys such as alpha-beta Ti alloys including, but not limited to: Ti-6Al-4V; Ti-6Al-2Sn-4Zr-2Mo-Si; and Ti-6Al-2Sn-4Zr-6Mo. The deposition material 58 may be selected to have one or more common (e.g., the same) or similar properties to material forming the underlying substrate 60. The deposition material 58 and the substrate material, for example, may be a common material; e.g., metal alloy. Of course, in other embodiments, the deposition material 58 may be different than, but have similar material properties as, the substrate material.

In step 412, referring to FIG. 9, a second object 84 is formed. The robotic unit 24 of FIG. 2, for example, utilizes the machining device 28 to selectively removes material from the first object 82 to form the second object 84 (e.g., the repaired component). This first object material is removed based on / according to the robotic unit toolpath data and the machining data; e.g., command(s) provided by the controller 34. The first object material may thereby be selectively removed using the second toolpath of the robotic arm 40 and/or component table 30 to at least partially restore or otherwise place the component 22 into the like new (or new) condition. The material removed from the first object 82 may include some of the deposition material 58 and/or some of the substrate material. This material may be removed by the machining device 28 through drilling, cutting, grinding, milling, polishing, sanding and/or otherwise.

The overhaul method 400 may utilize the robotic unit 24 to reduce manufacturing time, manufacturing waste and/or manufacturing costs. For example, when a component is worn or otherwise in need of repair, refurbishing, etc., that component may have unique defects; e.g., voids, wear regions, etc. Therefore, rather than using a standard (e.g., one-size-fits-all) patch or overhaul protocol, the light scanning device 32 of the robotic unit 24 may be utilized to specifically tailor a robotic unit toolpath for additive and substrative operations of a component in need of repair. A component manufactured using typical directed energy deposition (DED) processes may be subject to strong anisotropy in the mechanical properties of the final products and, thus, often do not meet the mechanical property requirements specified by aerospace material standards (AMS). By contrast, using the friction stir additive manufacturing (FSAM) process of the present disclosure produces fine-grained microstructures particularly suitable for titanium-based components. Compared to melt-based additive manufacturing processes (e.g., DED processes), FSAM processes produce a defect-free component with properties similar to those of the original component.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A method for overhauling a component (22), comprising:
providing a robotic unit (24), a solid state additive manufacturing device (26), a machining device (28) and a light scanning device (32), the robotic unit (24) configured to move one or more of the solid state additive manufacturing device (26), the machining device (28), and the light scanning device (32) along a plurality of axes;
scanning a substrate (60) using the light scanning device (32) to provide substrate scan data;
comparing the substrate scan data to substrate reference data;
depositing, using the solid state additive manufacturing device (26), a deposition material (58) with the substrate (60), the deposition material (58) plasticized and bonded to the substrate (60) during the depositing; and
machining, using the machining device (28), a first object (82) to provide a second object (84), the first object (82) comprising the substrate (60) and the deposition material (58) bonded to the substrate (60).

2. The method of claim 1, wherein the method further comprises:
providing a component table (30) configured to retain the substrate (60) and position the substrate (60) relative to the robotic unit (24), the component table (30) movable along a first axis (48) and a second axis (50).

3. The method of claim 1 or 2, wherein the deposition material (58) comprises a sacrificial wire or rod.

4. The method of claim 1, 2 or 3, wherein the solid state additive manufacturing device (26) is configured as a friction stir additive manufacturing (FSAM) device (26).

5. The method of claim 4, wherein the FSAM device (26) includes a sensor configured to detect a temperature or a pressure of the deposition material (58) during the depositing.

6. The method of any preceding claim, wherein the substrate reference data comprises data from a design specification for the component (22).

7. The method of any preceding claim, wherein:
the comparing the substrate scan data to substrate reference data includes generating robotic unit toolpath data;
the robotic unit toolpath data provides a plurality of toolpaths to the robotic unit (24); and
the plurality of toolpaths capable of moving the robotic unit (24) along the plurality of axes during the depositing and the machining.

8. The method of claim 7, wherein:
the plurality of toolpaths comprise a first toolpath and a second toolpath;
the first toolpath capable of moving the robotic unit (24) during the depositing; and
the second toolpath capable of moving the robotic unit (24) during the machining, and the second toolpath is different than the first toolpath.

9. The method of any preceding claim, wherein the depositing of the deposition material (58) includes:
rotating the deposition material (58) along a central axis (62); and
applying the deposition material (58) against the substrate (60) using a predetermined pressure.

10. The method of claim 9, wherein a spindle (56) is configured to deliver the deposition material (58) towards the substrate (60) in a continuous feed,
wherein, optionally, the spindle (56) includes a sensor configured to sense a FSAM setpoint of the deposition material (58) as the deposition material (58) is applied to the substrate (60).

11. The method of any preceding claim, wherein the plurality of axes comprise six to eight axes.

12. The method of any preceding claim, wherein the deposition material (58) comprises a titanium metal alloy,
wherein, optionally, the titanium metal alloy and the substrate (60) comprises a common metal alloy.

13. The method of any preceding claim, wherein:
the light scanning device (32) is configured as a laser light or a blue light; and/or
the method further comprises:
receiving a damaged component previously installed within an engine; and
the scanning, the depositing and the machining performed to repair the damaged component to provide the component (22).

14. A method for providing a component (22), comprising:
scanning a substrate (60) using a light scanning device (32) to provide substrate scan data;
comparing the substrate scan data to substrate reference data to provide additive manufacturing data and machining data;
rotating a deposition material (58) along a central axis (62) using a solid state additive manufacturing device (26);
applying, using the solid state additive manufacturing device (26), the deposition material (58) against the substrate (60) based on the additive manufacturing data, the deposition material (58) applied against the substrate (60) at a predetermined pressure, and the deposition material (58) plasticizes and bonds to the substrate (60) during the applying; and
machining, using a machining device (28), a first object (82) to provide a second object (84) based on the machining data, the first object (82) comprising the substrate (60) and the deposition material (58) bonded to the substrate (60);
wherein the light scanning device (32), the solid state additive manufacturing device (26), and the machining device (28) are operatively coupled to a robotic unit (24), the robotic unit (24) configured to move along a plurality of axes,
wherein, optionally:
the solid state additive manufacturing device (26) is a friction stir additive manufacturing device (26); and/or
a component table (30) is configured to retain the substrate (60) and position the substrate (60) relative to the robotic unit (24), the component table (30) movable along a first axis (48) and a second axis (50).

15. A system for providing a component (22) comprising a substrate (60), the system comprising:
a robotic unit (24) configured to translate along a plurality of axes;
a component table (30) configured to retain the substrate (60) and position the substrate (60) relative to the robotic unit (24), the component table (30) translatable with respect to the robotic unit (24);
a scanning device (32) configured to scan the substrate (60) using light to provide substrate (60) scan data indicative of one or more characteristics of the substrate (60), the scanning device (32) operatively coupled to the robotic unit (24);
a controller (34) configured to compare the substrate scan data to substrate reference data to provide robotic unit toolpath data, additive manufacturing data and machining data;
a solid state additive manufacturing device (26) configured to deposit deposition material (58) with the substrate (60) based on the additive manufacturing data and the robotic unit toolpath data, the deposition material (58) plasticized and bonded to the substrate (60) during the depositing of the deposition material (58), and the solid state additive manufacturing device (26) operatively coupled with the robotic unit (24); and
a machining device (28) configured to machine a first object (82) based on the machining data and the robotic unit toolpath data, the first object (82) comprising the substrate (60) and the deposition material (58) bonded to the substrate (60), and the machining device (28) operatively coupled to the robotic unit (24).
